# EUROPEAN PATENT APPLICATION

(11) **EP 1 137 314 A1**
(43) Date of publication of application: **26.09.2001**
(21) Application number: 00830219.2
(22) Date of filing: 23.03.2000
(51) Int. Cl.: H04Q 11/04

(54) **Telecommunication process and system handling data organized in cells of variable length**

(71) Applicant: Siemens Information and Communication Networks S.p.A., 20126 Milano (IT)
(72) Inventor: Rigolio, Giancarlo, 21013 Gallarate(VA) (IT); Morganti, Michele, 20136 Milano (IT); Gallassi, Giorgio, 20010 Cornaredo(MI) (IT)
(74) Representative: Giustini, Delio

(57) **Abstract**

A telecommunication system for transmitting and receiving data organized in packet of variable length among proprietary station by routing the data through a network equipped with switches handling data organized in standard packets or cells (ATM) each composed of a header followed by a payload of standard length.

The system including:
- a first downstream interface (A), at transmitting end station, where cells of non standard size are initially formed;
- nodes (non standard nodes) equipped with at least one non standard interface adaptor means, able to handle non standard size cells;
- standard nodes (standard ATM world) equipped with standard interfaces only, able to handle standard size cells.

## Description

### FIELD OF THE INVENTION

The present invention relates to telecommunication process and systems and in particular to a telecommunication process and system using packets or cells of different length.

### BACKGROUND OF THE INVENTION

Forecast for telecommunication of next future indicates that basically the largest part of voice communication will shift from terrestrial to wireless technology, thus radio communication will rocket impressively. Even if services different from voice ones will be supported, it is expected that in next future the 90% of the wireless traffic will be voice, and only the remaining 10% of the traffic will be generated by other applications.

In wireless communication bandwidth is a precious resource. Therefore, the achievement of a great efficiency in transporting radio packets is of paramount importance. Not surprisingly, a number of techniques for low bit-rate coding, suitable for radio communication, have been standardized by competent committees in last years. Just to mention few, the most popular, ITU-T has defined CS-ACELP, which produces a bit rate at 8kbit/s, in recommendation G.729, and its variation ASCELP-MP-MLQ, in G.723 recommendation. Even higher compression, down to 4kbit/s, may be obtained by ARIB/STD-27, using CELP algorithms.

In general, Asynchronous Transfer Mode technology (ATM) allows enough flexibility to support low bit rate connection, as well as many other multimedia communications, over a unified transport system. However, the fixed cell size, mandatory in standardized ATM systems presents a problem: the cell assembly delay increases as the bit rate decreases, thus packet delay can exceed service requirements.

The problem of reducing the cell assembly delay for low bit rate coding has been recently assessed jointly by ITU and ATM-Forum, which have reached a finalization with the standardization of the new AAL type 2.

By means of this solution, multiple voice channels can be multiplexed in one single ATM connection. AAL2 concerns itself with voice data packet and gives a standard method to encapsulate them within ATM cells. Voice data packets contain a unique voice channel identifier that allows recognizing each single voice channel within the ATM connection.

Radio packets can span over more than one ATM cell. Should a voice packet not exactly fit the empty portion of an ATM cell payload, the initial part of a voice packed can be used to fill up the available space, and the remaining portion of the broken packet will be included in the payload of the next cell of the ATM connection.

In order to achieve voice packet multiplexing/demultiplexing function, the specific AAL2 functionality is required at any point of the network where such a flexibility is desired. However, AAL2 is quite a complex functionality, which requires both buffering and processing resources.

One of the major reason for efficiency of an ATM switch is due to its commitment to handle fixed size ATM cells, having routing and switching information fields coded in fixed locations within the so-called header portion of a cell.

Efficiency in ATM payload filling is an issue bearing more heavily on the external lines. It is much less critical within a switch. In fact, normally, ATM switches internally adopt a non standard cell structure. Typically ATM switching equipment fills up the empty portion of the internal ATM frame structure with housekeeping information (e.g. for internal routing) and stuffing ("padding") bits.

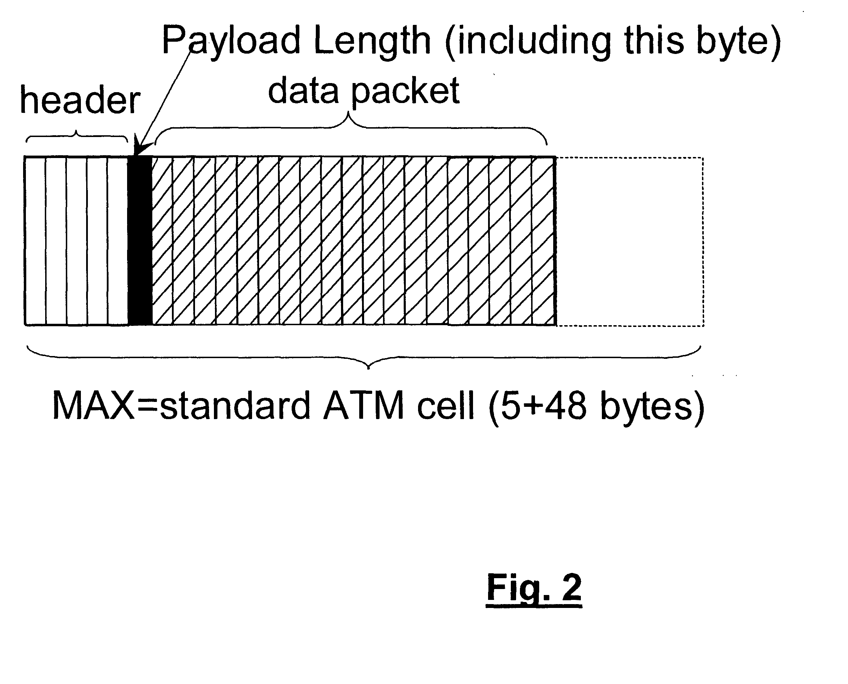

The need to fill up the 48 bytes payload of an ATM cell, depicted in Fig. 2, aimed to maximize transmission efficiency, is in contrast with delay requirements of low bit rate voice coding mechanisms currently used.

### OBJECT AND SUMMARY OF THE INVENTION

A non negligible reduction of the transmission time would be achieved by sending and receiving data through user lines organized in cells with standard header but with a payload of variable length modulated according to optimization criteria in assembly them. By doing so, only the essential bytes, i.e. bytes carrying information, would be transmitted without inserting padding bytes to fill up the payload of standard length.

Of course, transmissions among stations equipped with proprietary apparatuses capable of handling non-standard cells of variable length must take place through the existing ATM switches that handle cells of standard length.

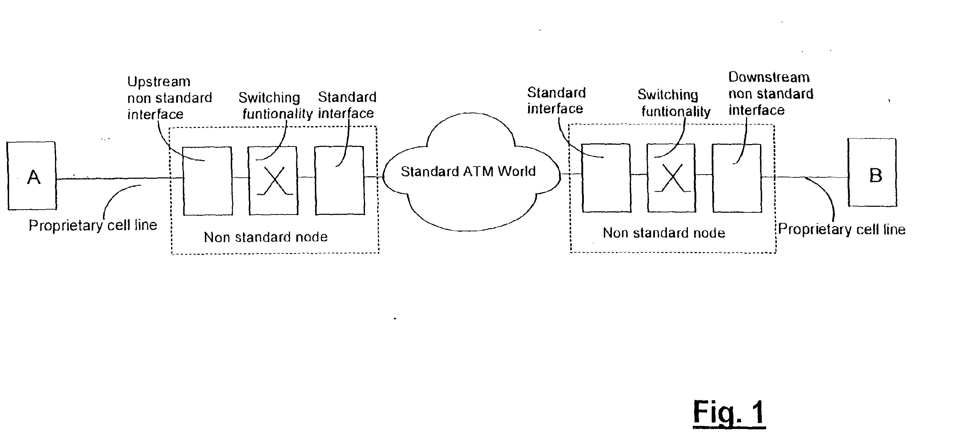

A diagram of the telecommunication system according to the invention may be represented as in Fig. 1. A transmitting station "A" sends data along the external (proprietary) line organized in cells of variable length to a receiving station "B". An upstream interface adaptor transforms the variable length cells in standard cells, allowing transport operations by the ATM network switches working with standard cells. The external line to the receiving station "B" has a downstream interface adaptor, which transforms standard length cells to cells of variable length.

Stations "A" and "B" in the diagram can be either end stations, or simply the downstream interface (station "A") and the upstream interface (station "B") of some standard (ATM) node equipped with proprietary line interface adaptors according to this invention.

All the functionality needed to upgrade according to the present invention an existing transmission system working with fixed length cells is in fact concentrated in the line adaptors which transforms non standard (variable length) cells into standard ones and viceversa, allowing use of existing switches and functionality; hybrid nodes can be allowed, partially equipped with standard line cards and partially upgraded in some interfaces according to the invention. Accordingly, the ATM network shown in Fig. 1 can even be reduced to a single ATM switch.

More precisely, the present invention is addressed to a telecommunication process having the features disclosed in claim 1 and to a telecommunication system having the features disclosed in claim 5.

### BRIEF DESCRIPTION OF THE DRAWINGS

The features of the present invention which are believed to be novel are set forth with particularity in the appended claims. In particular In a preferred embodiment of the invention, the cells are standardized according to the ATM standard described in I.150 ITU-T Rec.

The invention, together with further objects and advantages thereof, may be understood with reference to the following description taken in conjuunction with the accompanying drawings. wherein:
Figure 1 depicts the architecture of the telecommunication system of the invention;
Figure 2 shows variable length cell structure;
Figure 3 is a basic diagram of upstream handling circuit in an interface adaptor;
Figure 4 is a basic diagram of downstream handling circuit in an interface adaptor.

### DESCRIPTION OF AN EMBODIMENT OF THE INVENTION

In order to show all advantages of the telecommunication system of the invention, it will be applied to the ATM standard defined by I.150 ITU-T Rec, though the present invention can be usefully applied with any telecommunication standard.

The ATM standard expects data organized in cells constituted by 5+48 bytes, the first five bytes of which constitute the header of the cell and the remaining 48 bytes are used for transmitting data. The present invention uses variable length ATM cells whose maximum length is equal to the length of an ATM standard cell.

The variable length cells of the invention (Fig. 2) have a payload of non standardized length and the first byte of the payload is not a byte of data, as in standardized cells, but indicates the length of the payload ("payload length byte PL"). The use of some of the bytes of the payload to carry transport information instead of 'user' data is well known in ATM, e.g. when using AAL type 1 or 3/4.

In order to provide variable length cells to a network working only with standard ATM cells (which, as mentioned, can be reduced to a single ATM switch), the present invention (Fig. 1) provides non standard nodes equipped with at least a non standard interface. This non standard interface includes an upstream section transforming variable length cells in standard ATM cells and outputting them to the switching functionality, and a downstream section receiving standard cells form the switching functionality and transforming said standard ATM cell in a variable length cell, allowing the transmission of cells without padding bytes, which do not carry any information.

Other interfaces of the non standard nodes can be of the standard type; the system can also include standard nodes, with all the interfaces of standard type.

Non standard length cells are initially created by a non standard station A.

Non standard length cells are finally received by non standard station B.

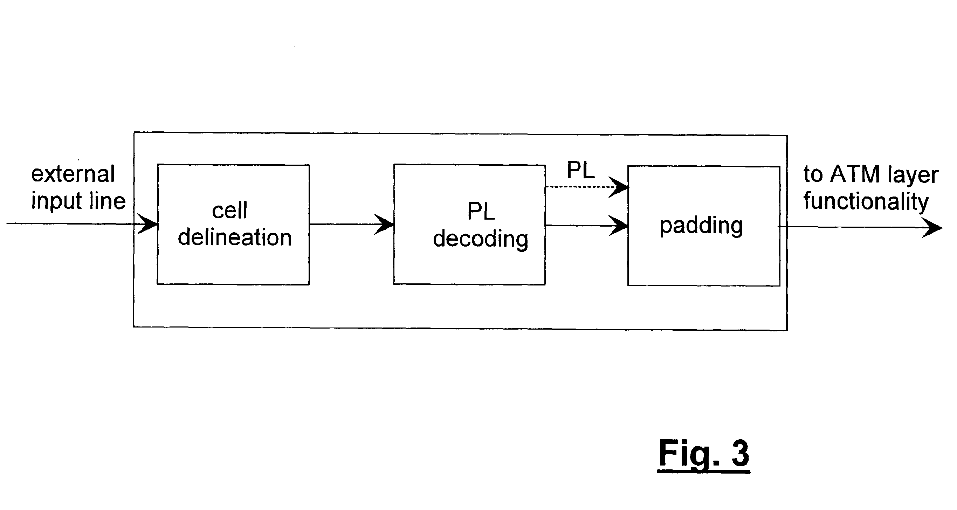

A basic diagram of the upstream section of the invention is depicted in Fig. 3. A variable length input cell is analized in order to identify the first and the last bytes of the cell (cell delineation), that can be done by reading the PL byte or also by using one of the well known allineation methods of identification of the header of an ATM cell. When the extreme bytes of the variable length cell have been identified, a certain number of padding bytes are attached to the payload in order to obtain a standard ATM cell, that inputs the ATM network (which, again, can be limited to a single ATM switch, that so becomes a hybrid standard/proprietary ATM node).

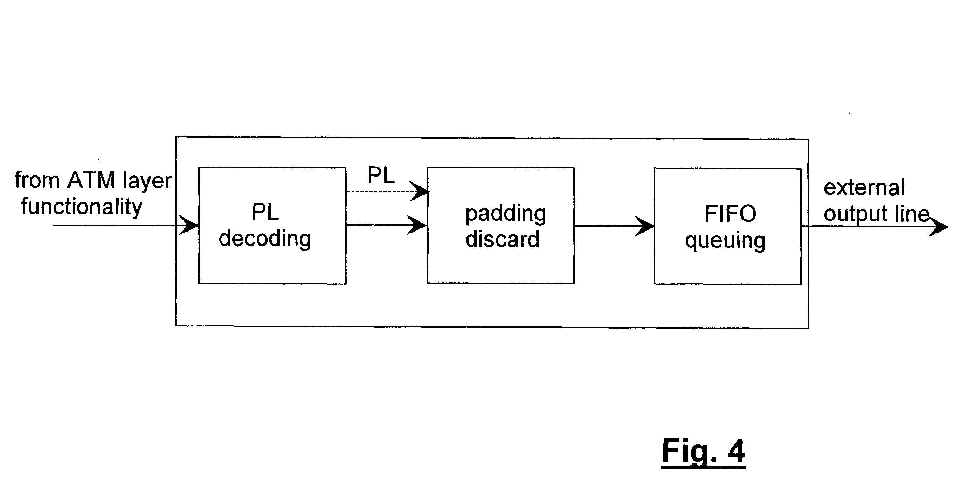

The downstream section depicted in Fig. 4 realizes the inverse transformation. The downstream circuit of the invention reads the payload byte PL of an input standard ATM cell identifying and discarding the padding bytes of the cell. The PL byte is used with a counter to identify the last of the bytes of data contained into the standard ATM cell in input, producing a variable length cell.

The output variable length cells are queued for transmission according to a FIFO queuing discipline in order to output such cells at the desired rate.

Therefore, while a particular embodiment of the present invention has been shown and described, it should be understood that the present invention is not limited thereto. It is thus contemplated that the present invention encompasses any and all such embodiments covered by the following claims.

## Claims

1. A telecommunication process for transferring data among stations by routing data through a network equipped with switches handling data organized in standard packets or cells (ATM) each composed of a header followed by a payload of standard length, **characterized by** the following operating steps:
A. creating non standard length cells in a first transmitting station (A);
B. receiving said non standard length cells in an upstream interface (Upstream non standard interface) of a non standard node and adapting said non standard length cells to standard ones by adding padding bytes to said non standard length cells;
C. discarding padding bytes in a downstream interface (Downstream non standard interface) of a non standard node and transmitting said non standard length cells onto external transmission line.

2. A telecommunication process of claim 1 **characterized in that** said step A includes the following steps:
- creating a standard header according standard procedures;
- coding the first payload byte with the length of the non standard payload;
- adding the user data to complete the overall non standard length cell, and finally
- outputting onto the external line (Proprietary cell line) the non standard length cell, to be eventually received by upstream interface (Upstream non standard interface) of the adaptor means on next node.

3. A telecommunication process of claim 1 **characterized in that** said steps B and C include the following actions:
a) detecting the beginning of input non standard length cell having a payload of variable length, shorter than said standard payload length;
b) reading a first byte to the payload of said input packets or cells containing the information on the length of the significant payload to detect the end of incoming cells or packets;
c) attaching to the existing payload of said received packet or cell padding bytes such to produce a cell of standard length outputted in an upstream pipeline of a node managing standard (ATM) cells;
d) on the downstream interface, reading the first byte of the payload containing the information on the length of the significant payload;
e) discarding any padding bytes added to the significant payload;
f) outputting a cell of nonstandard shorter length carrying the significant payload onto external transmission line.

4. The telecommunication process of the preceding claim wherein the length of the significant payload detected in the phase a) is detected by an allineation method based on the identification of the header.

5. A telecommunication system for transmitting data among stations by routing the data through a network equipped with switches or nodes handling data organized in standard packets or cells (ATM) each composed of a header followed by a payload of standard length, **characterized by** the presence of:
- a first downstream interface (A), at transmitting end station, where cells of non standard size are initially formed;
- nodes (Non standard node) equipped with at least one non standard interface adaptor means, able to handle non standard size cells;
- standard nodes (Standard ATM World) equipped with standard interfaces only, able to handle standard size cells.

6. The telecommunication system of claim 5, **characterized in that** said first downstream interface at transmitting end station (A), includes means adapted to:
- create a standard header according standard procedures,
- code the first payload byte with the length of the non standard payload, including in the count the payload length byte;
- add the user data to complete the overall non standard length cell, and finally
- output onto the external line the non standard length cell, to be eventually received by upstream interface of the adaptor means on next node

7. The telecommunication system of claim 5, **characterized in that** said nodes equipped with at least one non standard interface adaptor means are equipped with means adapted to handle non standard length cells, which in particular include:
- an upstream pipeline outputting standard length cells by detecting the length of an input cell and attaching to the existing payload padding bytes such to produce a cell of standard length;
- a downstream pipeline detecting the length of the significant payload and discarding any padding byte added to the significant payload by said upstream handling circuit and outputting a cell of nonstandard shorter length carrying the significant payload, the first byte of the payload of said cells containing the information on the length of the significant payload.

8. The telecommunication system of the claims 5 to 7 wherein said upstream interfacing adaptor means detects the length of the significant payload by an allineation method based on the identification of the header.

9. The telecommunication system of claims 5 to 7 wherein the upstream and downstream pipelines of said interfacing adaptor means detect the length of the significant payload payload by reading the first payload byte.

10. The telecommunication system according to claims 5 to 9 wherein said cells of standard length are organized according to the ATM standard.
